# EUROPÄISCHE PATENTSCHRIFT

(11) **EP 1 488 863 B1**
(45) Veröffentlichungstag und Bekanntmachung des Hinweises auf die Patenterteilung: **02.09.2009**
(21) Anmeldenummer: 04013221.9
(22) Anmeldetag: 04.06.2004
(51) Int. Cl.: B21B 37/16, B21B 37/54

(54) **System und Verfahren zur optimierenden Regelung der Dickenqualität in einem Walzprozess**
System and method for optimizing the control of the quality of thickness in a rolling process
Système et procédé pour l'optimisation du réglage de la qualité de l'épaisseur dans un processus de laminage

(30) Priorität: 20.06.2003 DE 10327663
(43) Veröffentlichungstag der Anmeldung: 22.12.2004
(73) Patentinhaber: ABB AG, 68309 Mannheim (DE)
(72) Erfinder: Belli, Paolo, 20162 Milano (IT); Feldmann, Frank, 67691 Hochspeyer (DE); Müller, Christian, Dr.-Ing., 68526 Ladenburg (DE); Brickwedde, Axel, Dr.-Ing., 69488 Birkenau (DE)
(74) Vertreter: Miller, Toivo

(56) Entgegenhaltungen:
- EP-A- 1 181 992
- WO-A-02/091092
- DE-A1- 4 338 615
- FELDMANN F ET AL: "Prozessoptimierung an einem CVC-6-HS-Reversiergerüst" STAHL UND EISEN, VERLAG STAHLEISEN, DÜSSELDORF, DE, Bd. 121, Nr. 8, 15. August 2001 (2001-08-15), Seiten 81-88, XP001093207 ISSN: 0340-4803
- FAN J ET AL: "Strip Thickness Control of Reversing Mill Using Self-tuning PID Neurocontroller" ISIJ INTERNATIONAL, Bd. 39, Nr. 1, 1999, Seiten 39-46, XP002362111
- GARIMELLA S S ET AL: "Application of Iterative Learning Control to Coil-to-Coil Control in Rolling" IEEE TRANSACTIONS ON CONTROL SYSTEMS TECHNOLOGY, IEEE SERVICE CENTER, NEW YORK, NY, US, Bd. 6, Nr. 2, März 1998 (1998-03), Seiten 281-293, XP000765958 ISSN: 1063-6536

## Beschreibung

Die Erfindung betrifft ein System sowie ein Verfahren zur Regelung der Dickenqualität in Walzprozessen, welche mit der Steuer-/Regeleinrichtung einer den jeweiligen Walzprozess ausführenden Walzstrasse zusammenwirken, wobei System und Verfahren insbesondere bei Kaltwalzprozessen oder Warmwalzprozessen in Bandwalzwerken mit wenigstens einer Walzstrasse für metallische Bänder mit einem oder mehreren Walzgerüsten einsetzbar sind.

Herkömmlich wird in einem Kaltwalzwerk mittels einer Walzstrasse, wobei die Walzstrasse neben einer Steuer-/Regeleinrichtung üblicherweise Umlenkrollen, eine Ablaufhaspel, eine Aufhaspel sowie ein oder mehrere Walzgerüste mit jeweils hydraulischem System, Stützwalzen und Arbeitswalzen umfasst, beim beispielsweise Bandwalzprozess ein auf der Ablauf- bzw. Abhaspel aufgerolltes Metallband abgerollt, mittels Ablenk- oder Umlenkrollen in einen Walzspalt des wenigstens einen Walzgerüstes eingeführt und walzspaltausgangsseitig über eine weitere Umlenkrolle von der Aufhaspel wieder zu einem Coil aufgerollt.

Die bei der Umlenkung des Metallbandes vom Band auf die Ablenkrollen eingangsseitig und ausgangsseitig übertragene Kraft bzw. der sich auf die Ablenkrollen ergebende Kraftfluss wird hierbei üblicherweise als Maß zur Bestimmung des Bandzuges bzw. der Zugspannung innerhalb des Metallbandes eingesetzt.

Mittels wenigstens eines Walzgerüstes, wobei entlang einer Walzstrasse auch mehrere Walzgerüste in Folge aufgestellt sein können, werden dem Metallband im Walzspalt mittels eines hydraulischen Systems über Stützwalzen und wenigstens zwei mit dem Metallband im Kontakt befindlichen Arbeitswalzen vertikal auf das Band wirkende Kräfte beaufschlagt, wodurch eine Reduktion der Dicke des Metallbandes beim Durchlaufen des Walzspaltes bewirkt wird.

Eine Dickenbestimmung des gewalzten Metallbandes erfolgt in Laufrichtung des Bandes eingangsseitig vor dem Walzspalt und ausgangsseitig hinter dem Walzspalt.

Bei bekannten Verfahren zur Regelung des Walzprozesses bzw. der Vorgänge im Walzspalt, insbesondere beim Kaltwalzprozess, werden zur Gewährleistung gleichbleibender Prozessbedingungen als Hauptregelgrößen vornehmlich die Banddicke nach Durchlaufen des Walzspaltes sowie die Zugspannung des Bandes zu beiden Seiten des Walzspaltes geregelt.

Als weitere unterlagerte Regel- beziehungsweise Stellgrößen stehen die Positionen der Stütz- und/oder Arbeitswalzen sowie die Momente der beiden Haspeln zur Verfügung.

Messgrößen im eigentlichen Sinn sind hierbei beispielsweise die Bandzüge beziehungsweise die vom Metallband auf die Ablenkrollen ausgeübten Kräfte, die Banddicke des Metallbandes vor und nach dem Walzspalt, die Einlaufgeschwindigkeit des Metallbandes und die Auslaufgeschwindigkeit des Bandes nach dem Walzspalt, die Bandlaufgeschwindigkeit im Walzspalt sowie die Walzkraft, die sensorisch und/oder messtechnisch erfasst werden.

Schwierigkeiten, die, insbesondere dem Kaltwalzprozess, im Walzspalt zugrunde liegenden Vorgänge möglichst realitätsnah zu modellieren und ein demgemäßes realitätsnahes Modell für eine optimierte Regelung der Dickenqualität des Walzprozesses zu erstellen sind maßgeblich auch darin begründet, dass sowohl elastische als auch plastische Verformungsprozesse im Walzspalt, insbesondere Verformungen des Metallbandes sowie der beteiligten Arbeitswalzen und Stützwalzen auftreten und somit auch im realitätsnahen Modell zu berücksichtigen sind.

Die Berücksichtigung vorgenannter Prozesse führt jedoch auf implizite algebraische Ausdrücke und Funktionen, die für jeden Integrationsschritt zu lösen sind und folglich einen immensen prozesstechnischen Verarbeitungs- bzw. Rechenaufwand bedeuten.

Eine weitere Schwierigkeit beim Versuch der möglichst realitätsnahen Modellierung und/oder Regelung eines insbesondere Kaltwalzprozesses stellt das zeit- und geschwindigkeitsabhängige Trägheitsmoment sowie der sich ändernde Radius der das Metallband jeweils aufwickelnden und abwickelnden Coils beziehungsweise Haspeln dar.

Beim Kaltwalzprozess handelt es sich um einen Mehrgrößenprozess (Multi Input Multi Output - Prozess, abgekürzt MIMO), wobei die verschiedenen Regelgrößen über den Walzspalt miteinander verkoppelt beziehungsweise gekoppelt sind. Demgemäß bedingt beispielsweise eine Verringerung des Walzspaltes aufgrund des damit einhergehenden verringerten Massenflusses durch den Walzspalt einen Einbruch der Zugspannung im Band. Änderungen in der Zugspannung des Bandes beeinflussen jedoch ihrerseits, bedingt durch die im Walzspalt veränderten Bedingungen, die Ausgangsbanddicke.

Da komplette Coils gewalzt werden sollen, das heißt inklusive Bandanfangs- und Bandendstück, muss die jeweilige Regelung und/oder das jeweilige Leit- oder Automatisierungssystem den gesamten Arbeitsbereich, inklusive An- und Abfahren, das heißt Bandgeschwindigkeiten im Bereich von beispielsweise 20m/min bis 2000m/min abdecken. Dabei können An- und Abfahren, insbesondere bei einer Beschleunigung auf 1000m/min innerhalb von 20 sec, bis zu 50% der Spulen- beziehungsweise Coilbandlänge ausmachen. An- und Abfahren erfolgen herkömmlich mittels einer Rampe, die über einen Sollwertgenerator vorgegeben wird.

Regelungstechnisch sind bei der Modellierung von Walzprozessen, insbesondere Kaltwalzprozessen, folgende Schwierigkeiten zu überwinden, nämlich dass
- die Bedingungen im Walzspalt durch nichtlineare, implizite Gleichungen zu beschreiben sind, deren Parameter sich mit der Walzgeschwindigkeit ändern,
- dem Walzspaltmodell zugrundezulegende relevante Parameter, wie insbesondere die Härte beziehungsweise der Formänderungskoeffizient k und die Reibung beziehungsweise der Reibungskoeffizient p beispielsweise von der Legierung, vom Verformungsgrad, von der Umformgeschwindigkeit, von der Temperatur, vom Schmiermittel und von der Rauheit des Bandmaterials und der Walzen abhängig sind, wobei deren Einflüsse auf den Walzprozess nur rudimentär bekannt sind und sich von Stich zu Stich ändern, so dass die relevanten Parameter lediglich näherungsweise abschätzbar sind,
- die Masse sowie der Durchmesser der Coils aufgrund des Ab- bzw. Aufwickelvorganges des Metallbandes zeitvariabel ist, wodurch sich eine permanente Trägheitsmomentänderung der Coils ergibt und durch die Radiusänderung das Verhalten, insbesondere die Eigenfrequenz des Schwingungssystems Coil - Einlaufband ändert,
- die Banddicke nicht direkt im Walzspalt sondern nur in einem Abstand von ca. einem Meter bis zwei Meter in Bandlaufrichtung nach bzw. hinter dem Walzspalt bestimmbar ist, was zu einer von der Bandlaufgeschwindigkeit abhängigen und damit variablen Totzeit von beispielsweise 0.03 - 3 sec führt. Um derartige Totzeiten, insbesondere hinsichtlich einer möglichst effizienten Regelung, weitestgehend zu vermeiden, ist eine indirekte Bestimmung der Banddicke anhand des Massenflusses durch den Walzspalt unter Berücksichtigung der ermittelten Einlaufdicke und der Bandgeschwindigkeiten vor und nach dem Walzspalt möglich.

Weitere Schwierigkeiten hinsichtlich der Regelung des Walzprozesses im Walzspalt ergeben sich aus dem Sachverhalt, dass auf den Prozess, insbesondere auch beim An- und Abfahren, zahlreiche periodische Störungen durch Dicken- und Härteschwankungen des Bandmaterials, des Coilschlags beziehungsweise Bundschlags, und der Exzentrizität der Walzen beziehungsweise Haspeln oder Coils wirken. Hierbei ist insbesondere der Coilschlag hervorzuheben, der vorrangig bei dickerem Walzmaterial, insbesondere Bandmaterial, durch Lagensprünge an der Einspannstelle des Bandes am Coil bei leerer werdendem Coil auftritt und zu impulsförmigen Störungen in der Bandspannung beziehungsweise der Zugspannung führt.

Auch Störungen aufgrund von Veränderungen der Banddicke im Einlauf in den Walzspalt sind nicht unerheblich, jedoch durch eine weitere Dickenmessung bestimmbar. Da derartige Veränderungen im Prinzip durch die weitere Dickenmessung sogar im Voraus, das heißt vor Eintritt des Metallbandes in den Walzspalt bekannt sind, sind derartige Störungen in Form einer Störgrößenaufschaltung in der entsprechenden Regelung zu berücksichtigen.

Eine Automatisierung des Walzprozesses erfolgt herkömmlich mittels gattungsgemäßer SISO-Regelkreise (Single Input Single Output-Regelkreise). Bei den hierbei eingesetzten Reglern handelt es sich üblicherweise um PI-Regler, deren Übertragungswerte den sich ändernden Bedingungen - maßgeblich den auftretenden Geschwindigkeitsänderungen - des Prozesses ständig angepasst werden müssen. Im einzelnen werden die Bandzugspannungen bzw. die auf die Umlenkrollen wirkenden Kräfte Fₜ₀, Fₜ₁, die über das Massenflussgesetz bestimmte Banddicke h_{mf} sowie nochmals überlagert die Banddicke h1 über die Banddickenmessung geregelt. Unterlagert ist eine Regelung für die Position und die Geschwindigkeit der Walzen. Störungen der Banddicke im Einlauf werden über eine Dickenvorsteuerung und eine Zugvorsteuerung mehr oder weniger entkoppelt aufgeschaltet. Um die Einflüsse durch die sich stark verändernden Parameter Härte und Reibung zu reduzieren, wird in bekannter Weise neben der Anpassung der Reglerparameter noch eine Geschwindigkeitsvorsteuerung hinzugefügt.

Ein entsprechendes System zur Regelung der Dickenqualität in einem Walzprozess, welches mit der Steuer-/Regeleinrichtung des den jeweiligen Walzprozess ausführenden Reversiergerüstes zusammenwirkt, ist aus Feldmann F. et al "Prozessoptimierung an einem CVC-6-HS-Reversiergerüst" Stahl und Eisen, Verlag Stahleisen, Düsseldorf DE, Bd. 121, Nr. 8, 15. August 2001, Seiten 81-88 bekannt geworden.

Wesentliche Nachteile dieser Automatisierungs- bzw. Regelstruktur ergeben sich hierbei aus der unvollständigen Entkopplung zwischen Dicken- und Zugregelung bzw. - vorsteuerung und der sehr aufwendigen Adaptation der Parameter der eingesetzten Regler und Vorsteuerungen sowie einer daraus resultierenden, sehr konservativen Auslegung des Dickenreglers beziehungsweise der Dickenregelung. Dies führt, durch die sich insbesondere beim An- und Abfahren der Haspeln aber auch im normalen Betrieb ergebenden ständigen Änderungen der Prozessbedingungen und/oder Störungen, zu Einschränkungen in der Regelgüte und/oder des Regelverhaltens und somit zu Einschränkungen der erreichbaren Produktqualität hinsichtlich Banddickeschwankungen.

Aufgabe der Erfindung ist es, ein verbessertes System und Verfahren zur Regelung der Dickenqualität in einem Walzprozess anzugeben, deren Regelverhalten von sich ändernden Prozessbedingungen weitestgehend unbeeinflusst ist.

Vorgenannte Aufgabe wird durch ein System zur optimierenden Regelung der Dickenqualität in einem Walzprozess, mit den Merkmalen des Anspruchs 1 gelöst.
Ein Verfahren zur Ausführung auf vorgenanntem System sowie vorteilhafte Ausgestaltungen des erfindungsgemäßen Systems und Verfahrens sind in weiteren Ansprüchen und der nachfolgenden Beschreibung angegeben.

Das erfindungsgemäße System überwindet die gattungsgemäßen Nachteile, indem es zur optimierenden Regelung der Dickenqualität in Walzprozessen, insbesondere in Kaltwalzprvzessen oder Warmwalzprozessen in Bandwalzwerken mit Walzstrassen für Metallbänder mit einem oder mehreren Walzgerüsten, mit einem unterlagerten Steuer-/Regelsystem der den jeweiligen Walzprozess ausführenden Walzstrasse zusammenwirkt und ein online Prozessmodell aufweist, welches online, im Dialog mit der unterlagerten Steuer-/Regeleinrichtung bzw. dem unterlagerten Steuer-/Regelsystern der Walzstrasse, eine Adaptation von Modellparametern auch durch Identifizierung variabler Prozessparameter durchführt. Des weiteren weist das System eine Anpassungseinheit auf, welche mit dem online Prozessmodell kommuniziert, mittels der adaptierten Modellparameter eine Anpassung von Regelparametern durchführt und die adaptierten Regelparameter zur Anpassung und Umsetzung von Regelfunktionen und/oder Regelkreisen einer modellbasierten Mehrgrößenregelungseinheit (MIMO) online aufprägt. Die modellbasierte Mehrgrößenregelungseinheit umfasst ihrerseits Mittel, um unter Einsatz der aufgeprägten angepassten Regelparameter und/oder adaptierten Regelfunktionen und/oder Regelkreise modellbasiert optimierte Regelund/oder Steuerungssignale zur Ansteuerung der Walzstrasse für eine optimierende Dickenregelung und/oder Zugregelung des jeweiligen Walzprozesses zu generieren und an die unterlagerte Steuer-/Regeleinrichtung der Walzstrasse weiterzugeben.

Vorteilhaft wird durch die modellbasierte online Adaptation von Modellparametern und der demgemäßen online Adaptation von relevanten Regelparametern und/oder Regelfunktionen und/oder Regelkreisen eine Optimierung des Regelverhaltens der jeweiligen Walzstrasse beziehungsweise des jeweiligen Walzprozesses erreicht, indem die modellbasierte Regelung, nicht zuletzt aufgrund der online Adaptation, von NichtLinearitäten und variablen Prozessparametern, insbesondere zeitlich variablen Prozessparametern, weitestgehend unabhängig wird und demgemäß über den gesamten Arbeits- beziehungsweise Regelbereich über eine besondere Regelqualität, Stabilität und Robustheit verfügt. Die online Adaptation kann hierbei beispielsweise zyklisch und/oder in Echtzeit erfolgen.

In einer vorteilhaften Ausgestaltungsform umfassen die Mittel der modellbasierten Mehrgrößenregelungseinheit (MIMO) eine Störgrößenaufschaltung, welche modellbasiert und online adaptiert eine dynamische Unterdrückung messtechnisch erfasster Störgrößen bewirkt und/oder eine Entkopplungseinheit, welche modellbasiert und online adaptiert eine dynamische Entkopplung vorbestimmter Prozessgrößen bewirkt. Des weiteren ist eine Regelungseinheit vorgesehen, welche modellbasiert und online adaptiert unter Vorgabe von Referenzposition der Walzen und Referenzdrehmoment der Haspelantriebe eine Regelung der Dickenqualität und/oder der Bandzugqualität bewirkt. Vorteilhaft ist alternativ zu einer dynamischen Unterdrückung von Störgrößen auch eine statische Unterdrückung von Störgrößen und/oder alternativ zu einer dynamischen Entkopplung auch eine statische Entkopplung von Prozessgrößen vorsehbar.

Die modellbasierte Dickenregelung und/oder die Regelung der Zug- bzw. Bandzugspannung und/oder die Entkopplungskreise und/oder die Störgrößenaufschaltung, insbesondere bezüglich der Einlaufdicke, beziehungsweise deren Regelparameter und/oder Regelfunktionen und/oder Regelkreise werden online auch durch Identifizierung variabler Prozessparameter und im direkten Informationsaustausch modellbasiert an variierende Prozessparameter angepasst.

Insbesondere eine dynamische Entkopplungseinheit wirkt hierbei vorteilhaft von der Referenzposition der Walzen auf die Referenzdrehmomente der Haspeln, wodurch eine Dickenregelung bewirkt ist, die nahezu unabhängig von Bandzugeinflüssen mit zeitvariablen Parametern und/oder mit sich ändernden prozessbedingten Resonanzfrequenzen und/oder von deren Dämpfungseffekten ist.

Die Entkopplungseinheit kann vorteilhaft dafür vorgesehen und bestimmt sein, eine Vereinfachung der Übertragungsfunktion zur Auslegung der Dickenregelung zu bewirken, wodurch eine erhöhte Bandbreite und effizientere Störgrößenunterdrückung der Dickenregelung erreichbar ist

In einer weiteren Ausgestaltung der Erfindung ist vorgesehen, dass die Störgrößenaufschaltung, basierend auf einer Messung der Einlaufdicke und/oder modellbasierten Erfassung der Rollenexzentrizität und/oder des Bundschlags, eine dynamische und/oder statische Korrekturaufschaltung auf die Referenzposition und/oder die Referenzdrehmomente der Haspeln bewirkt.

Von besonderem Vorteil ist eine vorsehbare übergeordnete online Überwachungseinheit, welche Mittel zur online Validierung adaptierter Modellparameter und/oder Mittel zur online Bestimmung und Überwachung des Regelverhalten und/oder der Regelgüte und/oder der Stabilität des Systems umfasst.

Eine vorteilhafte Ausführung des System sieht vor, dass das zugrunde gelegte online Prozessmodell in einzelne Komponenten separierbar ist und derart vereinfacht ist, dass nur die für die eigentliche Walzprozess-Regelung und deren Auslegung unbedingt erforderlichen online Prozessmodellkomponenten und die sich daraus ergebenden Teilmodelle und/oder Teilmodellkombinationen des online Prozessmodells berücksichtigt sind. Die Teilmodelle und/oder Teilmodellkombinationen des online Prozessmodells sind vorteilhaft zur weiteren Vereinfachung am variablen Betriebspunkt linearisierbar.

Eine online Identifizierung, das heißt eine online Bestimmung und/oder Abschätzung und/oder Bestimmung variabler Prozessparameter ist hierbei vorteilhaft anhand erfassbarer Prozessgrößen bzw. -signale und/oder unter Einsatz numerischer Verfahren und/oder direkter Berechnung über vorzugsweise explizite Gleichungen unter Einsatz vereinfachter Teilmodelle und/oder Teilmodellkombinationen des online Prozessmodells durchführbar.

Ein Computerprogramm zur Ausführung auf einer entsprechend eingerichteten Echtzeit-Datenverarbeitungseinrichtung, das die Merkmale des erfindungsgemäßen Verfahrens aufweist, führt zu einer bevorzugten Ausführungsform des erfindungsgemäßen Systems. Ein Computerprogramm, insbesondere ein auf einem Datenträger gespeichertes Computerprogramm, das die Merkmale des erfindungsgemäßen Verfahrens aufweist, wird daher ausdrücklich in den Offenbarungsgehalt der vorliegenden Anmeldung einbezogen.

Diese und weitere vorteilhafte Ausführungsformen und Ausgestaltungen der Erfindung sind Gegenstand der Figurenbeschreibungen und der abhängigen Ansprüche.

Die weitere Erläuterung und Darlegung der Erfindung sowie weiterer vorteilhafter Ausgestaltungen erfolgt anhand von einigen Figuren und Ausführungsbeispielen.

Es zeigen:
- Fig. 1: beispielhafte Walzstrasse eines Kaltwalzwerkes mit zugrunde gelegtem System und Verfahren zur optimierenden Regelung der Dickenqualität in einem Walzprozess
- Fig. 2: beispielhaftes System zur optimierenden Regelung der Dickenqualität in einem Walzprozess
- Fig. 3: beispielhaftes Regelschema der Mehrgrößenregelung
- Fig. 4: beispielhaft vereinfachtes online Prozessmodell mit Teilmodellen

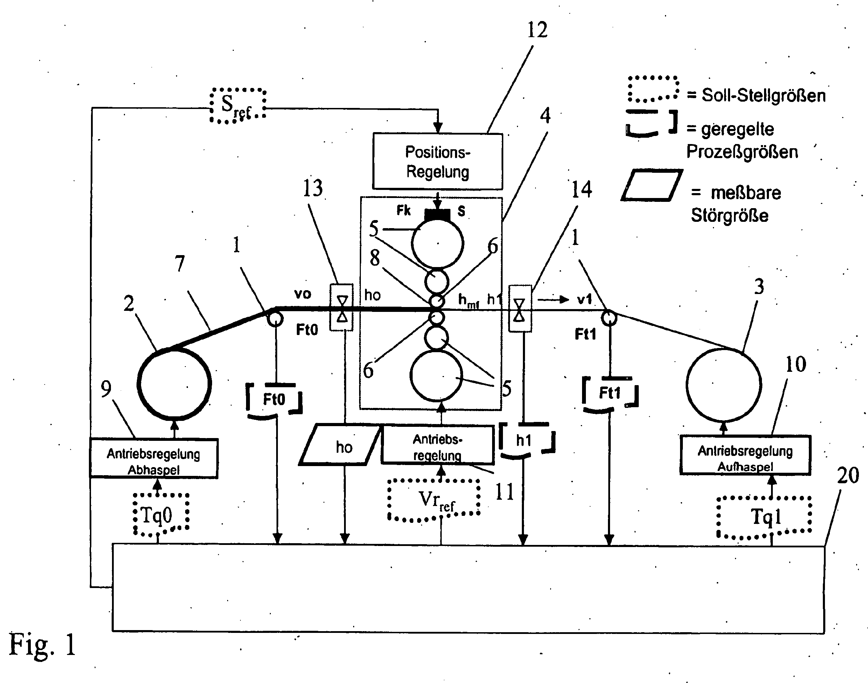

In Fig. 1 ist eine beispielhafte Bandwalzstrasse eines Kaltwalzwerkes mit einem einzelnen Walzgerüst und erfindungsgemäßem System zur optimierenden Regelung der Dickenqualität in einem Walzprozess gezeigt.

Die in Figur 1 gezeigte Walzstrasse für Metallbänder, umfasst neben Umlenkrollen 1 eine Ablaufhaspel 2, eine Aufhaspel 3 sowie ein einzelnes Walzgerüst 4 mit hydraulischem System, Stützwalzen 5 und Arbeitswalzen 6 auch eine unterlagerte Steuer-/Regeleinrichtung, die insbesondere zur Antriebsregelung 9,10 der Haspeln 2,3 und zur Antriebsregelung 11 der Walzen 5,6 sowie zu deren Positionsregelung 12 eingesetzt wird. Die Anzahl der Walzen des Walzgerüstes ist hier nicht entscheidend und beliebig. Beim Kaltwalzprozess in einem Bandwalzwerk wird üblicherweise ein auf der Ablauf- bzw. Abhaspel 2 aufgerolltes Metallband 7 abgerollt, mittels einer Ablenkoder Umlenkrolle 1 in den Walzspalt 8 des Walzgerüstes 4 eingeführt und walzspaltausgangsseitig über eine weitere Umlenkrolle 1 geführt und von der Aufhaspel 3 wieder aufgerollt.

Die bei der Umlenkung des Metallbandes 7 vom Band auf die Ablenkrollen 1 eingangsseitig und ausgangsseitig übertragenen Kräfte Ft0, Ft1 bzw. der sich auf die Ablenkrollen ergebende Kraftfluss wird hierbei üblicherweise als Maß zur Bestimmung des Bandzuges bzw. der Zugspannung innerhalb des Metallbandes 7 eingesetzt.

Mittels des hydraulischen Systems werden dem Metallband 7 über Stützwalzen 5 und wenigstens zwei mit dem Metallband 7 im Walzspalt 8 im Kontakt befindlichen Arbeitswalzen 6 vertikal auf das Band 7 wirkende Kräfte beaufschlagt, wodurch eine Verformung und Dickenänderung des Metallbandes 7 beim Durchlaufen des Walzspaltes 8 bewirkt wird. Die Kraft, die auf das Metallband ausgeübt wird kann messtechnisch als Walzkraft Fk erfasst werden.

Eine Dickenmessung des Metallbandes 7 erfolgt im hier gezeigten Beispiel, mittels zweier zum Walzspalt 8 beabstandet angeordneten Banddickenmessgeräte 13,14, sie kann grundsätzlich jedoch auch mit nur einem Banddickenmessgerät durchgeführt werden. Die zwei beispielhaft vorgesehenen Banddickenmessgeräte 13,14 befinden sich zur Messung der Einlaufdicke h0 in Laufrichtung des Bandes eingangsseitig vor dem Walzspalt und zur Messung der Auslaufdicke h1 ausgangsseitig hinter dem Walzspalt. Als unterlagerte Regel- beziehungsweise Stellgrößen stehen die Referenzposition S_{ref} der Stütz- 5 und/oder Arbeitswalzen 6 sowie das Referenzdrehmoment Tq0 der Abhaspel 2 und das Referenzdrehmoment Tq1 der Aufhaspel 3 zur Verfügung. Messgrößen im eigentlichen Sinn sind beispielsweise die Bandzüge beziehungsweise die vom Metallband auf die Ablenkrollen ausgeübten Kräfte Ft0 und Ft1, die Banddicke h0 des Metallbandes vor dem Walzspalt 8 und die Banddicke h1 des Metallbandes nach dem Walzspalt 8, die Einlaufgeschwindigkeit v0 des Metallbandes in und die Auslaufgeschwindigkeit v1 des Bandes aus dem Walzspalt 7 sowie die Bandlaufgeschwindigkeit und die Walzkraft Fk im Walzspalt 8, sensorisch erfassbar.

Das System zur optimierenden Regelung der Dickenqualität in einem Walzprozess ist hierbei vorteilhaft mittels einer dafür eingerichteten Echtzeit-Datenverarbeitungseinrichtung 20 realisierbar, welche über eine entsprechende Schnittstelle, beispielsweise mittels einer LAN- (Local Area Network) und/oder einer WAN- (Wide Area Network) und/oder einer Funk-Verbindung und/oder einem entsprechenden Bussystem mit dem unterlagerten Steuer-/Regelsystem 23 der den jeweiligen Walzprozess ausführenden Walzstrasse zusammenwirkt.

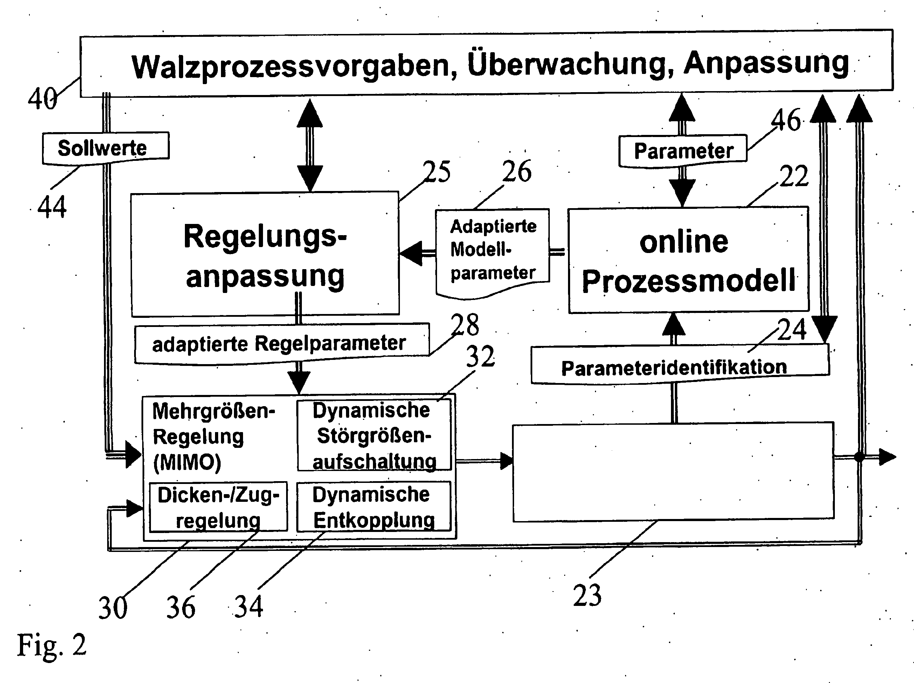

Das in Fig. 2 gezeigte, beispielhafte System zur optimierenden Regelung der Dickenqualität in einem Walzprozess, beziehungsweise die vorzugsweise zur Ausführung des entsprechenden Verfahrens vorgesehene und dafür eingerichtete Datenverarbeitungseinrichtung 20, weist ein online Prozessmodell 22 auf, welches vorteilhaft in einzelne Prozessmodellkomponenten und/oder Teilmodelle und/oder Teilmodellkombinationen separierbar ist und online, im direkten Dialog und/oder Informationsaustausch mit dem unterlagerten Steuer-/Regelsystem 23 der Walzstrasse, eine Adaptation von Modellparametern auch durch Identifikation 24 variabler Prozessparameter durchführt. Bei der Parameteridentifikation 24, welche eine online Bestimmung und/oder Schätzung von sich ändernden Prozessparametern durchführt, werden unter Berücksichtigung erfasster Prozessgrößen bzw. -signale vereinfachte Teilmodelle und/oder Teilmodellkombinationen des online Prozessmodells und/oder numerische Verfahren eingesetzt. Des weiteren ist eine Anpassungseinheit 25 vorgesehen ist, welche mit dem online Prozessmodell 22 kommuniziert, mittels der adaptierten Modellparameter 26 eine Anpassung von Regelparametern bewirkt und die adaptierten Regelparameter 28 zur Anpassung und Umsetzung von Regelfunktionen und/oder -kreisen einer modellbasierten Mehrgrößenregelungseinheit (MIMO) 30 online aufprägt. Mittels der modellbasierten Mehrgrößenregelungseinheit 30 werden, unter Einsatz der aufgeprägten angepassten Regelparameter 28 und/oder adaptierten Regelfunktionen und/oder -kreise, modellbasiert optimierte Regel- und/oder Steuerungssignale zur Ansteuerung des unterlagerten Steuer-/Regelsystems 23 der Walzstrasse für eine optimierende Dickenregelung und/oder Zugregelung generiert.

Die Mehrgrößenregelungseinheit 30 umfasst hierbei eine Störgrößenaufschaltung 32, welche modellbasiert und online adaptiert eine dynamische oder statische Unterdrückung messtechnisch erfasster Störgrößen bewirkt. Des weiteren ist eine Entkopplungseinheit 34 vorgesehen, welche modellbasiert und online adaptiert eine dynamische oder statische Entkopplung vorbestimmter Prozessgrößen bewirkt. Mittels einer Regelungseinheit 36, welche beispielsweise eine modellbasierte und online adaptierte PID-Regelung umfasst, wird unter Vorgabe von Referenzposition S_{ref} der Rollen 5,6 und von Referenzdrehmoment Tq0,Tq1 der Haspelantriebe 2,3 eine Regelung der Dickenqualität und/oder der Zugqualität des Walzprozesses bewirkt.

Vorteilhaft weist das in Fig. 2 gezeigte System eine übergeordnete online Überwachungseinheit 40 auf, die eine online Validierung adaptierter Modellparameter und/oder eine online Kontrolle des Regelverhaltens und/oder der Regelgüte und/oder der Stabilität des Systems bzw. der Walzstrasse erlaubt. Auch beispielsweise Walzprozessvorgaben, wie zum Beispiel offline ermittelte und/oder vorbestimmte Sollwerte 44 und/oder validierte Prozess- bzw. Modellparameter 46 und/oder nichtvariable Prozessparameter - gegebenenfalls offline ermittelt und/oder vorbestimmt - werden von der übergeordneten Überwachungseinheit zielgerichtet und selektiv an das online Prozessmodell 22, die Anpassungseinheit 25 und die Mehrgrößenregelungseinheit 30 übermittelt. Die modellbasierte online Regelungsanpassung erfolgt demgemäß im Zusammenwirken mit der übergeordneten Überwachungseinheit 40 sowie einer Datenbank, auf der empirische und/oder historische Prozessparameterdaten, insbesondere auch physikalisch/mechanische Betriebsmitteldaten, beispielsweise spezifische technische Daten das Walzgerüst bzw. seinen Aufbau betreffend, abrufbar gespeichert sind.

An dieser Stelle sei darauf hingewiesen, dass die übergeordnete Überwachungseinheit, auch wenn der Übersichtlichkeit halber nicht explizit in der Figur 2 angegeben, natürlich auch eine online Kontrolle und/oder Validierung der Parameteridentifikation und/oder der Anpassungseinheit sowie gegebenenfalls weiterer vorteilhaft vorgesehener Verarbeitungseinheiten vornehmen kann.

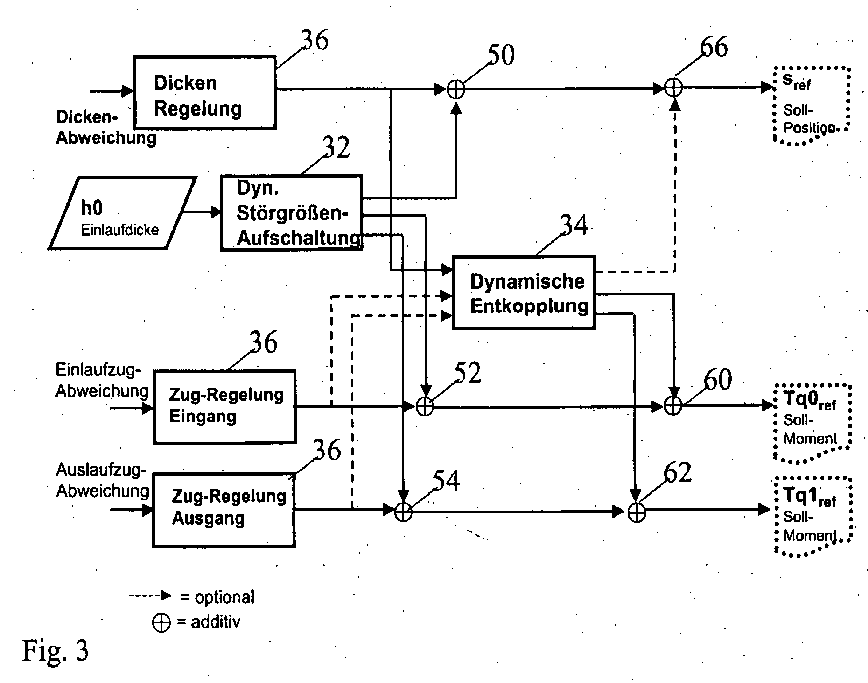

In Fig. 3 ist ein beispielhaftes Mehrgrößenregelschema des Verfahrens zur optimierenden Regelung der Dickenqualität in Walzprozessen gezeigt. Verfahrensgemäß wird hierbei, im Zusammenwirken mit dem unterlagerten Steuer/Regelsystem 23 der jeweiligen Walzstrasse, schrittweise mittels eines online Prozessmodells 22, im Dialog mit der unterlagerten Steuer-/Regeleinrichtung 23 der Walzstrasse, zyklisch und/oder in Echtzeit eine online Adaptation von Modellparametern auch durch Identifizierung 24 zeitlich variabler Prozessparameter durchgeführt. Mittels einer Anpassungseinheit 25, welche mit dem online Prozessmodell 22 kommuniziert und/oder Informationen austauscht, wird unter Verwendung der adaptierten Modellparameter 26 eine Anpassung von Regelparametern vorgenommen und die adaptierten Regelparameter 28 dann Regelfunktionen und/oder -kreisen einer modellbasierten Mehrgrößenregelungseinheit 30 online aufgeprägt, wobei die modellbasierte Mehrgrößenregelungseinheit 30, unter Einsatz der aufgeprägten angepassten Regelparameter 28 und/oder adaptierten Regelfunktionen und/oder - kreise, modellbasiert optimierte Regel- und/oder Steuerungssignale zur Ansteuerung des unterlagerten Steuer-/Regelsystems 23 der Walzstrasse für eine optimierende Dickenregelung und/oder Zugregelung generiert und an das Steuer-/Regelsystem 23 der Walzstrasse überträgt.

Zur Generierung optimierter Regel- und/oder Steuerungssignale wird mittels einer modellbasierten und online adaptierten Störgrößenaufschaltung 32 modellbasiert und online eine dynamische Unterdrückung messtechnisch erfassbarer Störgrößen durchgeführt, wobei im hier gezeigten Beispiel konkret eine Unterdrückung der Einlaufdicke h0 verwirklicht ist. Hierzu wird die Einlaufdicke als relevante Störgröße messtechnisch erfasst, beispielsweise als h0 vor dem Walzspalt direkt gemessen und der Störgrößenaufschaltung 32 zugeführt. Mittels der dynamischen Störgrößenaufschaltung 32 werden nun entsprechende Korrekturwerte- bzw. -größen bestimmt, die der, mittels einer Regelungseinheit 36 zur Dickenregelung, ermittelten Referenzposition S_{ref} über eine erste Korrekturaufschaltung 50, dem Referenzdrehmoment Tq0 der eingangsseitigen Bandzugregelung über eine zweite Korrekturaufschaltung 52 und dem Referenzdrehmoment Tq1 der ausgangsseitigen Bandzugregelung über eine dritte Korrekturaufschaltung 54 beaufschlagt werden. Grundsätzlich kann alternativ zu einer dynamischen Störgrößenaufschaltung 32 auch eine statische Störgrößenaufschaltung auf die Referenzposition S_{ref} und/oder die Referenzdrehmomente Tqo,Tq1 der Haspeln bewirkt werden. Auch eine Störgrößenaufschaltung auf die Referenzposition und/oder das Referenzdrehmoment der Haspeln beispielsweise basierend auf einer modellbasierten Erfassung der Rollenexzentrizität und/oder des Bundschlags ist dynamisch und/oder statisch vorteilhaft möglich.

Neben der dynamischen Störgrößenaufschaltung 32 wird mittels einer modelbasierten und online adaptierten Entkopplungseinheit 34 modellbasiert und online auch eine dynamische Entkopplung von Referenzposition S_{ref} der Walzen auf die Referenzdrehmomente Tq0,Tq1 der Haspeln durchgeführt. Hierzu wird die Referenzposition S_{ref} vor der ersten Korrekturaufschaltung 50 abgegriffen, der dynamischen Entkopplungseinheit 34 eingangsseitig zugeführt und jeweils entsprechende Korrekturwerte ermittelt, die dem Referenzdrehmoment der Abhaspel Tq0 über eine erste Entkopplungsaufschaltung 60 und dem Referenzdrehmoment der Aufhaspel Tq1 über eine zweite Entkopplungsaufschaltung 62 beaufschlagt werden. Hierbei wirkt die Entkopplungseinheit 34 vorteilhaft von der Referenzposition der Walzen auf die Referenzdrehmomente der Haspeln, jedoch ist grundsätzlich auch ein erweitertes Entkopplungsschema möglich bei dem die Referenzdrehmomente der Haspeln Tq0,Tq1 über die Entkopplungsaufschaltung 66 auf die Referenzposition der Walzen wirken, in Fig. 3 durch die gestrichelten Pfeile verdeutlicht. Auch realisierbar ist eine Entkopplung, bei der das Referenzdrehmoment Tq0 über die dynamische Entkopplungseinheit 34 auf das Referenzdrehmoment Tq1 wirkt und umgekehrt. Verfahrensgemäß wird durch die Entkopplung ein Regelverhalten der Dickenregelung erreicht, das weitgehend unabhängig von Bandzugeinflüssen mit zeitvariablen Parametern und/oder mit sich ändernden prozessbedingten Resonanzfrequenzen und/oder von sich ändernden Dämpfungseffekten ist.

Die von der modellbasierten und online adaptierten Mehrgrößenregelung ausgangsseitig ausgegebenen Referenzsignale ermöglichen demgemäß eine optimierende Regelung der Dickenqualität und/oder Zugqualität in einem Walzprozess, wobei das Regelverhalten von sich ändernden Prozessbedingungen weitestgehend unbeeinflusst ist.

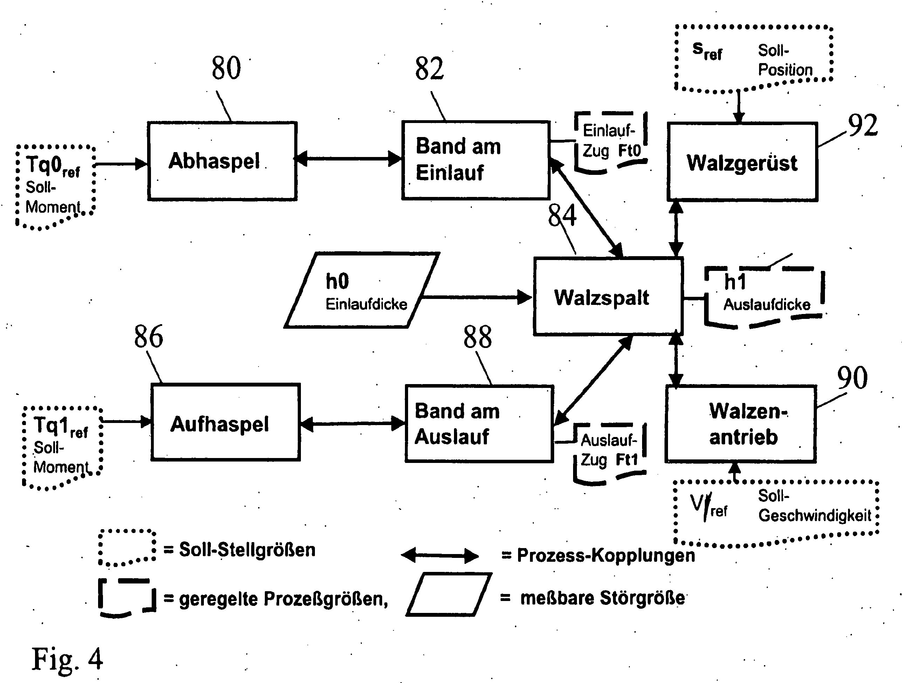

In Fig. 4 ist ein beispielhaft vereinfachtes online Prozessmodell 22 mit nur einigen, selektiv angegebenen geregelten Prozessgrößen gezeigt. Vorgenanntes Modell 22 ist in mehrere Teilmodelle und/oder Komponenten separierbar, die die relevanten Prozesskomponenten und/oder -parameter sowie deren Kopplungen - durch Doppelpfeile verdeutlicht - nachbilden. Das online Prozessmodell 22 umfasst demgemäß ein Modell der Abhaspel 80 dem als Stellgröße das Referenzdrehmoment Tq0 zugeführt wird, und das mit einem Modell des Bandeinlaufs 82 gekoppelt ist, welches als geregelte Prozessgröße beispielsweise den Einlaufzug Ft0 ausgibt, und das Modell des Bandeinlaufs 82 wiederum mit einem Walzspaltmodell 84 gekoppelt ist und mit diesem wechselwirkt. Des weiteren ist ein Modell der Aufhaspel 86 vorgesehen, dem als Stellgröße das Referenzdrehmoment Tq1 zugeführt wird, und das mit einem Modell des Bandauslaufs 88 gekoppelt ist, das als geregelte Prozessgröße beispielsweise den Auslaufzug Ft1 ausgibt, und das Modell des Bandauslaufs 88 wiederum mit dem Walzspaltmodell 84 gekoppelt ist und mit diesem wechselwirkt. Auch ein Teilmodell für den Walzenantrieb 90, dem als Stellgröße die Referenzgeschwindigkeit V_{ref} zugeführt wird, und ein Teilmodell für das Walzgerüst 92, dem als Stellgröße die Referenzposition S_{ref} zugeführt wird sind vorgesehen und mit dem Walzspaltmodell 84 gekoppelt. Dem Walzspaltmodell 84 wird als Störgröße die Einlaufdicke h0 zugeführt und liefert als geregelte Prozessgröße unter anderem die Auslaufdicke h1 zurück.

## Patentansprüche

1. System zur optimierenden Regelung der Dickenqualität in einem Walzprozess, welches mit dem unterlagerten Steuer-/Regelsystem (23) der den jeweiligen Walzprozess ausführenden Walzstrasse zusammenwirkt, **dadurch gekennzeichnet, dass**
• ein online Prozessmodell vorgesehen ist (22), welches online, im Dialog mit der unterlagerten Steuer-/Regeleinrichtung (23) der Walzstrasse, eine Adaptation von Modellparametern auch durch Identifizierung (24) variabler Prozessparameter durchführt,
• eine Anpassungseinheit (25) vorgesehen ist, welche mit dem online Prozessmodell (22) kommuniziert, mittels der adaptierten Modellparameter (26) eine Anpassung von Regelparametern durchführt und die adaptierten Regelparameter (28) zur Umsetzung und Anpassung von Regelfunktionen und/oder -kreisen einer modellbasierten Mehrgrößenregelungseinheit (30) online aufprägt, und
• die modellbasierte Mehrgrößenregelungseinheit (30) Mittel aufweist, um unter Einsatz der aufgeprägten angepassten Regelparameter (28) und/oder adaptierten Regelfunktionen und/oder -kreise modellbasiert eine Generierung optimierter Regel- und/oder Steuerungssignale zur Ansteuerung der Walzstrasse für eine optimierende Dickenregelung und/oder Zugregelung des Walzprozesses zu bewirken.

2. System nach Anspruch 1, **dadurch gekennzeichnet, dass** die Mittel der modellbasierten Mehrgrößenregelungseinheit (30)
• eine Störgrößenaufschaltung (32) umfassen, welche modellbasiert und online adaptiert eine dynamische Unterdrückung messtechnisch erfasster Störgrößen bewirkt, und/oder
• eine Entkopplungseinheit (34) umfassen, welche modellbasiert und online adaptiert eine dynamische Entkopplung vorbestimmter Prozessgrößen bewirkt und/oder
• eine Regelungseinheit (36) umfassen, welche modellbasiert und online adaptiert unter Vorgabe von Referenzposition und Referenzdrehmoment der Haspelantriebe eine Regelung der Dickenqualität und/oder der Zugqualität bewirkt.

3. System nach einem der Ansprüche 1 oder 2, **dadurch gekennzeichnet, dass** die Mittel der modellbasierten Mehrgrößenregelungseinheit (30)
• eine Störgrößenaufschaltung (32) umfassen, welche modellbasiert und online adaptiert eine statische Unterdrückung messtechnisch erfasster Störgrößen bewirkt und/oder
• eine Entkopplungseinheit (34) umfassen, welche modellbasiert und online adaptiert eine statische Entkopplung vorbestimmter Prozessgrößen bewirkt und/oder
• eine Regelungseinheit (36) umfassen, welche modellbasiert und online adaptiert unter Vorgabe von Referenzposition und Referenzdrehmoment der Haspelantriebe eine Regelung der Dickenqualität und/oder der Zugqualität bewirkt.

4. System nach einem der vorherigen Ansprüche, **dadurch gekennzeichnet, dass** das zugrunde gelegte online Prozessmodell (22) mehrere Komponenten (80,82,84,86,88,92,90) aufweist und
• derart vereinfacht ist, dass nur die für die Regelung und deren Auslegung unbedingt erforderlichen online Prozessmodellkomponenten (80,82,84,86,88,92,90) berücksichtigt sind und/oder
• durch Linearisierung am variablen Betriebspunkt vereinfacht ist.

5. System nach einem der Ansprüche 2 bis 4, **dadurch gekennzeichnet, dass** die Entkopplungseinheit (34) dafür eingerichtet und bestimmt ist, um eine Dickenregelung zu bewirken, die nahezu unabhängig ist von Bandzugeinflüssen mit zeitvariablen Parametern und/oder von sich ändernden prozessbedingten Resonanzfrequenzen und/oder unabhängig von sich ändernden Dämpfungseffekten.

6. System nach einem der Ansprüche 2 bis 5, **dadurch gekennzeichnet, dass** die Entkopplungseinheit (34) dafür eingerichtet und bestimmt ist, eine Vereinfachung der Übertragungsfunktion zur Auslegung der Dickenregelung zu bewirken, wodurch eine erhöhte Bandbreite und effizientere Störgrößenunterdrückung der Dickenregelung erreicht ist.

7. System nach einem der Ansprüche 2 bis 6, **dadurch gekennzeichnet, dass** die Störgrößenaufschaltung (32) dafür eingerichtet und bestimmt ist, um basierend auf einer Messung der Einlaufdicke (h0) eine dynamische und/oder statische Korrekturaufschaltung auf die Referenzposition (S_{ref}) und/oder das Referenzdrehmoment (Tq0,Tq1) der Haspeln zu bewirken.

8. System nach einem der Ansprüche 2 bis 7, **dadurch gekennzeichnet, dass** die Störgrößenaufschaltung (32) dafür eingerichtet und bestimmt ist, um basierend auf einer modellbasierten Erfassung der Rollenexzentrizität und/oder des Bundschlags eine dynamische und/oder statische Korrekturaufschaltung (50,52,64) auf die Referenzposition (S_{ref}) und/oder das Referenzdrehmoment (Tq0,Tq1) der Haspeln zu bewirken.

9. System nach einem der vorherigen Ansprüche, **dadurch gekennzeichnet, dass** Mittel vorgesehen sind, um durch online Adaption der Prozessmodell- und Regelparameter eine Übertragungsfunktion zur Dickenregelung zu bestimmen, die von zeitvariablen Parametern und Nichtlinearitäten weitestgehend unabhängig ist.

10. System nach einem der vorherigen Ansprüche, **dadurch gekennzeichnet, dass** eine übergeordnete online Überwachungseinheit (40) vorgesehen ist, welche
• Mittel zur online Überprüfung und/oder Validierung adaptierter Modellparameter und/oder
• Mittel zur online Kontrolle des Regelverhalten und/oder Regelgüte und/oder Stabilität des Systems aufweisen.

11. System nach einem der vorherigen Ansprüche, **dadurch gekennzeichnet, dass** zur modellbasierten online Regelungsanpassung eine Datenbank vorgesehen ist, die empirische und/oder historische Prozessparameterdaten und/oder Walzprozess spezifische Parameterdaten aufweist.

12. System nach Anspruch 11, **dadurch gekennzeichnet, dass** die empirischen Prozessparameterdaten basierend auf einem oder mehreren Testläufen bestimmt sind.

13. System nach einem der vorherigen Ansprüche, **dadurch gekennzeichnet, dass** Mittel vorhanden sind, um eine online Schätzung und/oder eine online Bestimmung von sich während des Walzprozesses ändernden Prozessparametem zyklisch und/oder in Echtzeit durchzuführen.

14. System nach einem der vorherigen Ansprüche, **dadurch gekennzeichnet, dass** Mittel vorhanden sind, um die Adaptation des online Prozessmodells zyklisch und/oder in Echtzeit durchzuführen.

15. System nach einem der vorherigen Ansprüche, **dadurch gekennzeichnet, dass** Mittel vorhanden sind, um die online Adaptation der modellbasierten Mehrgrößenregelungseinheit (30), insbesondere ihrer Regelungseinheit (36) mit Regelparametern und/oder Regelfunktionen und/oder Regelkreisen und/oder ihrer Entkopplungseinheit (34) und/oder ihrer Störgrößenaufschaltung (32), zyklisch und/oder in Echtzeit durchzuführen.

16. System nach einem der vorherigen Ansprüche, **dadurch gekennzeichnet, dass** zur online Identifikation (24), das heißt zur online Bestimmung und/oder online Schätzung von sich ändernden Prozessparametern unter Berücksichtigung messtechnisch erfasster Prozessgrößen vereinfachte Teilmodelle und/oder Teilmodellkombinationen (80,82,84,86,88,90,92) des online Prozessmodells eingesetzt sind.

17. System nach einem der vorherigen Ansprüche, **dadurch gekennzeichnet, dass** zur online Schätzung von sich ändernden Prozessparametern numerische Verfahren und/oder explizite Gleichungen, basierend auf vereinfachten Modellen, eingesetzt sind.

18. Verfahren zur optimierenden Regelung der Dickenqualität in Walzprozessen, welches mit dem unterlagerten Steuer-/Regelsystem (20) einer den Walzprozess ausführenden Walzstrasse zusammenwirkt, **dadurch gekennzeichnet dass** schrittweise
• mittels eines online Prozessmodells (22), im Dialog mit der unterlagerten Steuer-/Regeleinrichtung (20) der Walzstrasse, online eine Adaptation von Modellparametern auch durch Identifizierung (24) zeitlich variabler Prozessparameter durchgeführt wird,
• mittels einer Anpassungseinheit (25), welche mit dem online Prozessmodell kommuniziert, adaptierte Modellparameter (26) zur Anpassung von Regelparametern verwendet werden und die adaptierten Regelparameter (28) zur Umsetzung und Anpassung von Regelfunktionen und/oder -kreisen einer modellbasierten Mehrgrößenregelungseinheit (30) online aufgeprägt werden und
• mittels der modellbasierten Mehrgrößenregelungseinheit (30), unter Verwendung der aufgeprägten angepassten Regelparameter (28) und/oder adaptierten Regelfunktionen und/oder -kreise modellbasiert optimierte Regel- und/oder Steuerungssignale zur Ansteuerung des unterlagerten Steuer-/Regelsystems (23) der Walzstrasse für eine optimierende Dickenregelung und/oder Zugregelung generiert werden.

19. Verfahren nach Anspruch 18, **dadurch gekennzeichnet, dass** die modellbasierte Mehrgrößenregelungseinheit (30)
• mittels einer online adaptierten Störgrößenaufschaltung (32) modellbasiert und online eine dynamische Unterdrückung messtechnisch erfassbarer Störgrößen durchgeführt wird und/oder
• mittels einer online adaptierten Entkopplungseinheit (34) modellbasiert und online eine dynamische Entkopplung vorbestimmter Prozessgrößen durchgeführt wird und/oder
• mittels einer online adaptierten Regelungseinheit (36) modellbasiert und online, unter Vorgabe von Referenzposition (S_{ref}) und Referenzdrehmoment (Tq0,Tq1) der Haspelantriebe, eine Regelung der Dickenqualität und/oder der Zugqualität des Walzprozesses durchführt.

20. Verfahren nach einem der Ansprüche 18 oder 19, **dadurch gekennzeichnet, dass** die modellbasierte Mehrgrößenregelungseinheit (30)
• mittels einer online adaptierten Störgrößenaufschaltung (32) modellbasiert und online eine statische Unterdrückung messtechnisch erfassbarer Störgrößen durchgeführt wird und/oder
• mittels einer online adaptierten Entkopplungseinheit (34) modellbasiert und online eine statische Entkopplung vorbestimmter Prozessgrößen durchgeführt wird und/oder
• mittels einer online adaptierten Regelungseinheit (36) modellbasiert und online, unter Vorgabe von Referenzposition (S_{ref}) und Referenzdrehmoment (Tq0,Tq1) der Haspelantriebe, eine Regelung der Dickenqualität und/oder der Zugqualität des Walzprozesses durchführt.

21. Verfahren nach einem der Ansprüche 18 bis 20, **dadurch gekennzeichnet, dass** das zugrunde gelegte online Prozessmodell (22)
• in mehrere Komponenten (80,82,84,86,88,90,92) zerlegbar ist und
• dadurch vereinfacht wird, dass nur die für die Regelung und deren Auslegung unbedingt erforderlichen online Prozessmodellkomponenten (80,82,84,86,88,90,92) berücksichtigt werden und/oder
• eine Linearisierung am variablen Betriebspunkt durchgeführt wird.

22. Verfahren nach einem der Ansprüche 19 bis 21, **dadurch gekennzeichnet, dass** mittels der Entkopplungseinheit (34) eine Dickenregelung durchgeführt wird, die weitgehend unabhängig von Bandzugeinflüssen mit zeitvariablen Parametern und/oder mit sich ändernden prozessbedingten Resonanzfrequenzen und/oder unabhängig von deren Dämpfungseffekten ist.

23. Verfahren nach einem der Ansprüche 19 bis 22, **dadurch gekennzeichnet, dass** mittels der Entkopplungseinheit (34) eine Vereinfachung der Übertragungsfunktion zur Auslegung der Dickenregelung durchgeführt wird, wodurch eine erhöhte Bandbreite und effizientere Störgrößenunterdrückung der Dickenregelung erreicht wird.

24. Verfahren nach einem der Ansprüche 19 bis 23, **dadurch gekennzeichnet, dass** die Störgrößenaufschaltung (32) basierend auf einer Messung der Einlaufdicke (h0) eine dynamische und/oder statische Korrekturaufschaltung (50,52,54) auf die Referenzposition ((S_{ref}) und/oder das Referenzdrehmoment (Tq0,Tq1) der Haspeln bewirkt.

25. Verfahren nach einem der Ansprüche 19 bis 24, **dadurch gekennzeichnet, dass** die Störgrößenaufschaltung (32) basierend auf einer modellbasierten Erfassung der Rollenexzentrizität und/oder des Bundschlags eine dynamische und/oder statische Korrekturaufschaltung auf die Referenzposition (S_{ref}) und/oder das Referenzdrehmoment (Tq0,Tq1) der Haspeln bewirkt.

26. Verfahren nach einem der Ansprüche 18 bis 25, **dadurch gekennzeichnet, dass** durch online Adaption der Prozessmodell- und/oder Regelparameter eine Übertragungsfunktion zur Dickenregelung bestimmt wird, die von zeitvariablen Parametern und Nichtlinearitäten weitestgehend unabhängig wird.

27. Verfahren nach einem der Ansprüche 18 bis 26, **dadurch gekennzeichnet, dass** mittels einer übergeordneten online Überwachungseinheit (40) eine online Überwachung und/oder Validierung adaptierter Modellparameter (26) und/oder eine online Kontrolle des Regelverhaltens und/oder der Regelgüte und/oder der Stabilität des Systems durchgeführt wird.

28. Verfahren nach einem der Ansprüche 18 bis 27, **dadurch gekennzeichnet, dass** die modellbasierte online Regelungsanpassung (25) im Zusammenwirken mit einer Datenbank durchgeführt wird, auf der empirische und/oder historische Prozessparameterdaten und/oder Walzprozess spezifische Parameterdaten abrufbar gespeichert sind.

29. Verfahren nach Anspruch 28, **dadurch gekennzeichnet, dass** unter normalen Betriebsbedingungen nicht variable Prozessparameter auch anhand empirisch ermittelter und/oder historischer Betriebsmitteldaten bestimmt werden.

30. Verfahren nach einem der Ansprüche 18 bis 29, **dadurch gekennzeichnet, dass** unter normalen Betriebsbedingungen nicht variable Prozessteile und/oder Prozessparameter über vereinfachte Modelle nachgebildet und bestimmt werden.

31. Verfahren nach Anspruch 30, **dadurch gekennzeichnet, dass** ausgewählte empirische Prozessparameterdaten mittels wenigstens eines Testlaufs bestimmt werden.

32. Verfahren nach einem der Ansprüche 18 bis 31, **dadurch gekennzeichnet, dass** eine online Schätzung und/oder eine online Bestimmung sich im Prozessverlauf ändernden Prozessparametem zyklisch und/oder in Echtzeit durchgeführt wird.

33. Verfahren nach einem der Ansprüche 18 bis 32, **dadurch gekennzeichnet, dass** die Adaptation des online Prozessmodells (22) zyklisch und/oder in Echtzeit durchgeführt wird.

34. Verfahren nach einem der Ansprüche 18 bis 33, **dadurch gekennzeichnet, dass** die online Adaptation der modellbasierten Mehrgrößenregelungseinheit (30), insbesondere ihrer Regelungseinheit (36) mit Regelparametern und Regelfunktionen und/oder Regelkreisen und/oder ihrer Entkopplungseinheit (34) und/oder ihrer Störgrößenaufschaltung (32), zyklisch und in Echtzeit durchgeführt wird.

35. Verfahren nach einem der Ansprüche 18 bis 34, **dadurch gekennzeichnet, dass** für die online Bestimmung und/oder online Schätzung von sich ändernden Prozessparametern und unter Berücksichtigung messtechnisch erfasster Prozessgrößen vereinfachte Teilmodelle und/oder Teilmodellkombinationen (80,82,84,86,88,90,92) des online Prozessmodells (22) verwendet werden.

36. Verfahren nach einem der Ansprüche 18 bis 35, **dadurch gekennzeichnet, dass** für eine online Schätzung von sich ändernden Prozessparametem numerische Verfahren und/oder explizite Gleichungen unter Einsatz vereinfachter Teilmodelle und/oder Teilmodellkombinationen (80,82,84,86,88,90,92) des online Prozessmodells (22) verwendet werden.

## Claims

1. System for optimizing the control of the quality of thickness in a rolling process, said system interacting with the subordinate control/adjustment system (23) of the rolling train which carries out the respective rolling process, **characterized in that**
• an online process model is provided (22) which, online, in dialogue with the subordinate control/adjustment facility (23) of the rolling train, carries out an adaptation of model parameters also through identification (24) of variable process parameters,
• an adaptation unit (25) is provided which communicates with the online process model (22), carries out an adaptation of control parameters by means of the adapted model parameters (26), and delivers the adapted control parameters (28) online to a model-based multivariable control unit (30) for the implementation and adaptation of control functions and/or control circuits, and
• the model-based multivariable control unit (30) has means to generate model-based optimized adjustment and/or control signals using the delivered adapted control parameters (28) and/or adapted control functions and/or control circuits to control the rolling train for optimizing the thickness control and/or tension control of the rolling process.

2. System according to claim 1, **characterized in that** the means of the model-based multivariable control unit (30)
• comprise a disturbance variable compensation (32), which effects a model-based and online-adapted dynamic suppression of measured and recorded disturbance variables and/or
• comprise a decoupling unit (34) which effects a model-based and online-adapted dynamic decoupling of predefined process parameters, and/or
• a control unit (36) which, with specification of the reference position and the reference torque of the coil drives, effects a model-based and online-adapted control of the thickness quality and/or tension quality.

3. System according to one of claims 1 or 2, **characterized in that** the means of the model-based multivariable control unit (30)
• comprise a disturbance variable compensation (32), which effects a model-based and online-adapted static suppression of measured and recorded disturbance variables and/or
• comprise a decoupling unit (34) which effects a model-based and online-adapted static decoupling of predefined process parameters, and/or
• a control unit (36) which, with specification of the reference position and the reference torque of the coil drives, effects a model-based and online-adapted control of the thickness quality and/or tension quality.

4. System according to one of the preceding claims, **characterized in that** the underlying online process (22) model has a plurality of components (80,82,84,86,88,92,90), and
• is simplified in such a way that only the online process model components (80,82,84,86,88,92,90) which are absolutely necessary for the control and its design are taken into account and/or
• is simplified through linearization on the variable operating point.

5. System according to one of claims 2 to 4, **characterized in that** the decoupling unit (34) is set up and intended to effect a thickness control which is virtually independent of strip tension influences with time-variable parameters and/or changing process-related resonant frequencies and/or independent of changing damping effects.

6. System according to one of claims 2 to 5, **characterized in that** the decoupling unit (34) is set up and intended to effect a simplification of the transmission function to design the thickness control, whereby an increased range and more efficient disturbance variable compensation of the thickness control is achieved.

7. System according to one of claims 2 to 6, **characterized in that** the disturbance variable compensation (32) is set up and intended, on the basis of a measurement of the run-in thickness (h0), to effect a dynamic or static correction on the reference position (S_{ref}) and/or the reference torque (Tq0,Tq1) of the coils.

8. System according to one of claims 2 to 7, **characterized in that** the disturbance variable compensation (32) is set up and intended, on the basis of a model-based recording of the roller eccentricity and/or the strip eccentricity, to effect a dynamic or static correction (50,52,64) on the reference position (S_{ref}) and/or the reference torque (Tq0,Tq1) of the coils.

9. System according to one of the preceding claims, **characterized in that** means are provided to define a transmission function for thickness control which is, as far as possible, independent of time-variable parameters and nonlinearities through online adaptation of the process model parameters and control parameters.

10. System according to one of the preceding claims, **characterized in that** a higher-order online monitoring unit (40) is provided, which has
• means for online verification and/or validation of adapted model parameters and/or
• means for online monitoring of the control behaviour and/or control quality and/or stability of the system.

11. System according to one of the preceding claims, **characterized in that,** for model-based online control adaptation, a database is provided which has empirical and/or historical process parameter data and/or rolling-process-specific parameter data.

12. System according to claim 11, **characterized in that** the empirical process parameter data are defined on the basis of one or more test runs.

13. System according to one of the preceding claims, **characterized in that** means are provided to carry out, cyclically and/or in real time, an online estimation and/or an online definition of process parameters which change during the rolling process.

14. System according to one of the preceding claims, **characterized in that** means are provided to carry out the adaptation of the online process model cyclically and/or in real time.

15. System according to one of the preceding claims, **characterized in that** means are provided to carry out the online adaptation of the model-based multivariable control unit (30), in particular its control unit (36) with control parameters and/or control functions and/or control circuits and/or its decoupling unit (34) and/or its disturbance variable compensation (32), cyclically and/or in real-time.

16. System according to one of the preceding claims, **characterized in that** simplified sub-models and/or sub-model combinations (80,82,84,86,88,90,92) of the online process model are used for online identification (24), i.e. for online definition and/or online estimation of changing process parameters, taking into account measured and recorded process parameters.

17. System according to one of the preceding claims, **characterized in that** numerical methods and/or explicit equations, based on simplified models, are used for online estimation of changing process parameters.

18. Method for optimizing the control of the quality of thickness in rolling processes, which interacts with the subordinate control/adjustment system (20) of a rolling train which carries out the respective rolling process, **characterized in that,** step by step,
• by means of an online process model (22), in dialogue with the subordinate control/adjustment facility (20) of the rolling train, an online adaptation of model parameters is carried out, also through identification (24) of time-variable process parameters,
• by means of an adaptation unit (25), which communicates with the online process model, adapted model parameters (26) are used for adaptation of control parameters and the adapted control parameters (28) are delivered online to a model-based multivariable control unit (30) for the implementation and adaptation of control functions and/or control circuits, and
• by means of the model-based multivariable control unit (30), using the delivered adapted control parameters (28) and/or adapted control functions and/or control circuits, model-based optimized adjustment and/or control signals are generated to control the subordinate control/adjustment system (23) of the rolling train for optimizing the thickness control and/or tension control.

19. Method according to claim 18, **characterized in that** the model-based multivariable control unit (30)
• by means of an online-adapted disturbance variable compensation (32), a model-based, online dynamic suppression of measurable disturbance variables is carried out, and/or
• by means of an online-adapted decoupling unit (34), a model-based, online dynamic decoupling, of predefined process parameters is effected, and/or
• by means of an online-adapted control unit (36), specifying the reference position (S_{ref}) and the reference torque (Tq0,Tq1) of the coil drives, a model-based, online control of the thickness quality and/or tension quality of the rolling process is effected.

20. Method according to one of claims 18 or 19, **characterized in that** the model-based multivariable control unit (30)
• by means of an online-adapted disturbance variable compensation (32), a model-based, online static suppression of measurable and recordable disturbance variables is effected, and/or
• by means of an online-adapted decoupling unit (34), a model-based, online static decoupling of predefined process parameters is effected, and/or
• by means of an online-adapted control unit (36), specifying the reference position (S_{ref}) and the reference torque (Tq0,Tq1) of the coil drives, a model-based, online control of the thickness quality and/or tension quality of the rolling process is effected.

21. Method according to one of claims 18 to 20, **characterized in that** the underlying online process model (22)
• can be divided up into a plurality of components (80,82,84,86,88,90,92), and
• is simplified in such a way that only the online process model components (80,82,84,86,88,90,92) which are absolutely necessary for the control are taken into account and/or
• a linearization is carried out on the variable operating point.

22. Method according to one of claims 19 to 21, **characterized in that,** by means of the decoupling unit (34), a thickness control is carried out which is largely independent of strip tension influences with time-variable parameters and/or with changing process-related resonant frequencies and/or independent of their damping effects.

23. Method according to one of claims 19 to 22, **characterized in that,** by means of the decoupling unit (34), a simplification of the transmission function is carried out for the design of the thickness control, whereby an increased range and more efficient disturbance variable suppression of the thickness control is achieved.

24. Method according to one of claims 19 to 23, **characterized in that** the disturbance variable compensation (32), on the basis of a measurement of the run-in thickness (h0), effects a dynamic and/or static correction (50,52,54) on the reference position (S_{ref}) and/or the reference torque (Tq0,Tq1) of the coils.

25. Method according to one of claims 19 to 24, **characterized in that** the disturbance variable compensation (32), on the basis of a model-based recording of the roller eccentricity and/or the strip eccentricity, effects a dynamic and/or static correction on the reference position (S_{ref}) and/or the reference torque (Tq0,Tq1) of the coils.

26. Method according to one of claims 18 to 25, **characterized in that,** through online adaptation of the process model parameters and/or control parameters, a transmission function is defined for thickness control which is, as far as possible, independent of time-variable parameters and nonlinearities.

27. Method according to one of claims 18 to 26, **characterized in that,** by means of a higher-order online monitoring unit (40), an online monitoring and/or validation of adapted model parameters (26) and/or an online monitoring of the control behaviour and/or the control quality and/or the stability of the system is carried out.

28. Method according to one of claims 18 to 27, **characterized in that** the model-based online control adaptation (25) is carried out through interaction with a database on which empirical and/or historical process parameter data and/or rolling-process-specific parameter data are stored.

29. Method according to claim 28, **characterized in that** non-variable process parameters are also defined under normal operating conditions using empirically determined and/or historical equipment data.

30. Method according to one of claims 18 to 29, **characterized in that** non-variable process components and/or process parameters are simulated and defined under normal operating conditions using simplified models.

31. Method according to claim 30, **characterized in that** selected empirical process parameter data are defined by means of at least one test run.

32. Method according to one of claims 18 to 31, **characterized in that** an online estimation and/or an online definition of process parameters which change during the process is carried out cyclically and/or in real time.

33. Method according to one of claims 18 to 32, **characterized in that** the adaptation of the online process model (22) is carried out cyclically and/or in real time.

34. Method according to one of claims 18 to 33, **characterized in that** the online adaptation of the model-based multivariable control unit (30), in particular its control unit (36) with control parameters and control functions and/or control circuits and/or its decoupling unit (34) and/or its disturbance variable compensation (32), is carried out cyclically and in real time.

35. Method according to one of claims 18 to 36, **characterized in that** simplified sub-models and/or sub-model combinations (80,82,84,86,8,90, 92) of the online process model (22) are used for the online definition and/or online estimation of changing process parameters, also taking account of measured and recorded process parameters.

36. Method according to one of claims 18 to 37, **characterized in that** numerical methods and/or explicit equations using simplified sub-models and/or sub-model combinations (80,82,84,86,88,90,92) of the online process model (22) are used for an online estimation of changing process parameters.

## Revendications

1. Procédé de régulation et d'optimisation de la qualité d'épaisseur dans un processus de laminage, qui coopère avec le système de commande et de régulation subordonné (23) du train de laminoirs exécutant le processus de laminage en question, **caractérisé en ce que :**
• il est prévu un modèle de processus en ligne (22) qui exécute en ligne, en dialogue avec le dispositif de commande et de régulation subordonné (23) du train de laminoirs, une adaptation de paramètres de modèle entre autres par l'identification (24) de paramètres de processus variables,
• il est prévu une unité d'adaptation (25) qui communique avec le modèle de processus en ligne (22), exécute au moyen des paramètres de modèle adaptés (26) une adaptation de paramètres de régulation et applique les paramètres de régulation adaptés (28) en ligne pour la réalisation et l'adaptation de fonctions et/ou circuits de régulation d'une unité de régulation à plusieurs grandeurs (30) basée sur le modèle, et
• l'unité de régulation à plusieurs grandeurs (30) basée sur le modèle présente des moyens pour réaliser, en utilisant les paramètres de régulation adaptés (28) appliqués et/ou les fonctions et/ou circuits de régulation adaptés, sur la base du modèle, une génération de signaux de régulation et/ou de commande optimisés pour la commande du train de laminoirs en vue d'une régulation visant l'optimisation de l'épaisseur et/ou d'une régulation de la traction dans le processus de laminage.

2. Système selon la revendication 1, **caractérisé en ce que** les moyens de l'unité de régulation à plusieurs grandeurs (30) basée sur le modèle
• comprennent une prise en compte de grandeurs parasites (32) qui réalise sur la base du modèle et avec une adaptation en ligne une inhibition dynamique des grandeurs parasites captées par les mesures, et/ou
• comprennent une unité de découplage (34) qui réalise sur la base du modèle et avec une adaptation en ligne un découplage dynamique de grandeurs de processus prédéterminées et/ou
• comprennent une unité de régulation (36) qui réalise sur la base du modèle et avec une adaptation en ligne, avec la spécification de la position de référence et du couple de rotation de référence des entraînements des bobineuses, une régulation de la qualité de l'épaisseur et/ou de la qualité de la traction.

3. Système selon l'une des revendications 1 ou 2, **caractérisé en ce que** les moyens de l'unité de régulation à plusieurs grandeurs (30) basée sur le modèle
• comprennent une prise en compte de grandeurs parasites (32) qui réalise sur la base du modèle et avec une adaptation en ligne une inhibition statique des grandeurs parasites captées par les mesures, et/ou
• comprennent une unité de découplage (34) qui réalise sur la base du modèle et avec une adaptation en ligne un découplage statique de grandeurs de processus prédéterminées et/ou
• comprennent une unité de régulation (36) qui réalise sur la base du modèle et avec une adaptation en ligne, avec la spécification de la position de référence et du couple de rotation de référence des entraînements des bobineuses, une régulation de la qualité de l'épaisseur et/ou de la qualité de la traction.

4. Système selon l'une des revendications précédentes, **caractérisé en ce que** le modèle de processus en ligne (22) pris pour base présente plusieurs composants (80, 82, 84, 86, 88, 92, 90) et
• est tellement simplifié que seuls les composants du modèle de processus en ligne (80, 82, 84, 86, 88, 92, 90) indispensables à la régulation ou à son paramétrage sont pris en compte et/ou
• est simplifié par linéarisation au point de fonctionnement variable.

5. Système selon l'une des revendications 2 à 4, **caractérisé en ce que** l'unité de découplage (34) est équipée et conçue pour réaliser une régulation de l'épaisseur presque indépendante des influences de la traction de la bande à paramètres variables dans le temps et/ou des fréquences de résonance variables dues au processus et/ou indépendante d'effets d'amortissement variables.

6. Système selon l'une des revendications 2 à 5, **caractérisé en ce que** l'unité de découplage (34) est conçue en vue de simplifier la fonction de transmission pour le dimensionnement de la régulation d'épaisseur, ce qui permet d'obtenir une largeur de bande accrue et une inhibition plus efficace des grandeurs parasites de la régulation de l'épaisseur.

7. Système selon l'une des revendications 2 bis 6, **caractérisé en ce que** la prise en compte des grandeurs parasites (32) est conçue pour réaliser, sur la base d'une saisie de l'épaisseur d'entrée (h0), une activation de correction dynamique et/ou statique (50, 52, 64) vers la position de référence (S_{ref}) et/ou le couple de rotation de référence (Tq0, Tq1) des bobineuses.

8. Système selon l'une des revendications 2 bis 7, **caractérisé en ce que** la prise en compte des grandeurs parasites (32) est conçue pour réaliser, sur la base d'une saisie basée sur le modèle de l'excentricité des rouleaux et/ou du débattement des bobines, une activation de correction dynamique et/ou statique (50, 52, 64) vers la position de référence (S_{ref}) et/ou le couple de rotation de référence (Tq0, Tq1) des bobineuses.

9. Système selon l'une des revendications précédentes, **caractérisé en ce que** des moyens sont prévus pour déterminer par l'adaptation en ligne des paramètres du modèle de processus et de régulation une fonction de transmission pour la régulation de l'épaisseur qui est en majeure partie indépendante des paramètres variables dans le temps et des non-linéarités.

10. Système selon l'une des revendications précédentes, **caractérisé en ce qu'**il est prévu une unité de surveillance en ligne (40) de niveau supérieur qui possède
• des moyens pour contrôler et/ou valider en ligne des paramètres de modèle adaptés et/ou
• des moyens pour contrôler en ligne le comportement de régulation et/ou la qualité de régulation et/ou la stabilité du système.

11. Système selon l'une des revendications précédentes, **caractérisé en ce qu'**en vue de l'adaptation de régulation en ligne basée sur le modèle, il est prévu une banque de données qui contient des données de paramètres de processus empiriques et/ou historiques et/ou des données de paramètres spécifiques de chaque processus de laminage.

12. Système selon la revendication 11, **caractérisé en ce que** les données de paramètre de processus empiriques sont déterminées sur la base d'un ou plusieurs cycles de test.

13. Système selon l'une des revendications précédentes, **caractérisé en ce qu'**il existe des moyens pour réaliser une estimation en ligne et/ou une détermination en ligne de paramètres de processus variables pendant le processus de laminage, de manière cyclique ou en temps réel.

14. Système selon l'une des revendications précédentes, **caractérisé en ce qu'**il existe des moyens pour réaliser l'adaptation du modèle de processus en ligne de manière cyclique et/ou en temps réel.

15. Système selon l'une des revendications précédentes, **caractérisé en ce qu'**il existe des moyens pour réaliser l'adaptation en ligne de l'unité de régulation à plusieurs grandeurs (30) basée sur le modèle, en particulier de son unité de régulation (36), avec des paramètres de régulation et/ou des fonctions de régulation et/ou des circuits de régulation et/ou son unité de découplage (34) et/ou sa prise en compte des grandeurs parasites (32), de façon cyclique et/ou en temps réel.

16. Système selon l'une des revendications précédentes, **caractérisé en ce qu'**en vue de l'identification en ligne (24), c'est-à-dire de la détermination en ligne et/ou de l'estimation en ligne de paramètres de processus variables, des sous-modèles et/ou des combinaisons de sous-modèles (80, 82, 84, 86, 88, 90, 92) du modèle de processus en ligne sont utilisés en tenant compte des paramètres de processus captés par les systèmes de mesure.

17. Système selon l'une des revendications précédentes, **caractérisé en ce que** des méthodes numériques et/ou des équations explicites basées sur des modèles simplifiés sont utilisées pour l'estimation en ligne de paramètres de processus variables.

18. Procédé de régulation et d'optimisation de la qualité d'épaisseur dans un processus de laminage, qui coopère avec le système de commande et de régulation subordonné (23) d'un train de laminoirs exécutant le processus de laminage, **caractérisé en ce que,** par étapes :
• une adaptation de paramètres de modèle est exécutée, entre autres par l'identification (24) de paramètres de processus variables dans le temps, au moyen d'un modèle de processus en ligne (22), en dialogue avec le dispositif de commande et de régulation subordonné (23) du train de laminoirs,
• au moyen d'une unité d'adaptation (25) qui communique avec le modèle de processus en ligne (22), des paramètres de modèle adaptés (26) sont utilisés pour adapter les paramètres de régulation et les paramètres de régulation adaptés (28) sont appliqués en ligne pour réaliser et adapter des fonctions et/ou circuits de régulation d'une unité de régulation à plusieurs grandeurs (30) basée sur le modèle, et
• au moyen l'unité de régulation à plusieurs grandeurs (30) basée sur le modèle, utilisant les paramètres de régulation adaptés (28) appliqués et/ou les fonctions et/ou circuits de régulation adaptés, des signaux de régulation et/ou de commande optimisés sur la base du modèle sont générés pour la commande du système de commande et de régulation (23) subordonné du train de laminoirs en vue d'une régulation visant l'optimisation de l'épaisseur et/ou d'une régulation de la traction.

19. Procédé selon la revendication 18, **caractérisé en ce que** l'unité de régulation à plusieurs grandeurs (30) basée sur le modèle
• réalise au moyen d'une prise en compte de grandeurs parasites (32), sur la base du modèle et en ligne, une inhibition dynamique des grandeurs parasites captées par les mesures, et/ou
• réalise au moyen d'une unité de découplage (34) adaptée en ligne, sur la base du modèle et en ligne, un découplage dynamique de grandeurs de processus prédéterminées et/ou
• réalise au moyen d'une unité de régulation (36), sur la base du modèle et en ligne, avec la spécification de la position de référence (S_{ref}) et du couple de rotation de référence (Tq0, Tq1) des entraînements de bobineuses, une régulation de la qualité de l'épaisseur et/ou de la qualité de la traction du processus de laminage.

20. Procédé selon l'une des revendications 18 ou 19, **caractérisé en ce que** l'unité de régulation à plusieurs grandeurs (30) basée sur le modèle
• réalise au moyen d'une prise en compte de grandeurs parasites (32) adaptée en ligne, sur la base du modèle et en ligne, une inhibition statique des grandeurs parasites captées par les mesures, et/ou
• réalise au moyen d'une unité de découplage (34) adaptée en ligne, sur la base du modèle et en ligne, un découplage statique de grandeurs de processus prédéterminées et/ou
• réalise au moyen d'une unité de régulation (36), sur la base du modèle et en ligne, avec la spécification de la position de référence (S_{ref}) et du couple de rotation de référence (Tq0, Tq1) des entraînements des bobineuses, une régulation de la qualité de l'épaisseur et/ou de la qualité de la traction du processus de laminage.

21. Procédé selon l'une des revendications 18 à 20, **caractérisé en ce que** le modèle de processus en ligne (22) pris pour base
• peut être décomposé en plusieurs composants (80, 82, 84, 86, 88, 90, 92) et
• est simplifié par le fait que seuls les composants du modèle de processus en ligne (80, 82, 84, 86, 88, 90, 92) indispensables à la régulation et à son dimensionnement sont pris en compte et/ou
• une linéarisation est exécutée au point de fonctionnement variable.

22. Procédé selon l'une des revendications 19 à 21, **caractérisé en ce que** l'unité de découplage (34) réalise une régulation de l'épaisseur qui est en grande partie indépendante des influences de la traction de la bande à paramètres variables dans le temps et/ou ayant des fréquences de résonances variables liées au processus et/ou indépendante de ses effets d'amortissement.

23. Procédé selon l'une des revendications 19 à 22, **caractérisé en ce que** l'unité de découplage (34) réalise une simplification de la fonction de transfert pour le dimensionnement de la régulation de l'épaisseur, ce qui permet d'obtenir une largeur de bande accrue et une inhibition plus efficace des grandeurs parasites de la régulation de l'épaisseur.

24. Procédé selon l'une des revendications 19 à 23, **caractérisé en ce que** la prise en compte des grandeurs parasites (32) réalise, sur la base d'une mesure de l'épaisseur d'entrée (h0), une activation de correction dynamique et/ou statique (50, 52, 64) sur la position de référence (S_{ref}) et/ou le couple de rotation de référence (Tq0, Tq1) des bobineuses.

25. Procédé selon l'une des revendications 19 à 24, **caractérisé en ce que** la prise en compte des grandeurs parasites (32) réalise, sur la base de la détection basée sur le modèle de l'excentricité des rouleaux et/ou du débattement des bobines, une activation de correction dynamique et/ou statique sur la position de référence (S_{ref}) et/ou le couple de rotation de référence (Tq0, Tq1) des bobineuses.

26. Procédé selon l'une des revendications 18 à 25, **caractérisé en ce que** l'adaptation en ligne des paramètres de modèle de processus et/ou de régulation permet de déterminer une fonction de transfert pour la régulation de l'épaisseur qui est en majeure partie indépendante des paramètres variables dans le temps et des non-linéarités.

27. Procédé selon l'une des revendications 18 à 26, **caractérisé en ce qu'**une unité de surveillance en ligne supérieure (40) permet de réaliser une surveillance et/ou une validation en ligne des paramètres de modèle adaptés (26) et/ou un contrôle en ligne du comportement de régulation et/ou de la qualité de régulation et/ou de la stabilité du système.

28. Procédé selon l'une des revendications 18 à 27, **caractérisé en ce que** l'adaptation de la régulation en ligne (25) basée sur le modèle est exécutée en coopération avec une banque de données dans laquelle des données de paramètres de processus empiriques et/ou historiques et/ou des données de paramètres spécifiques du processus de laminage sont enregistrées de façon à pouvoir être appelées.

29. Procédé selon la revendication 28, **caractérisé en ce que** des paramètres de processus non variables dans les conditions de fonctionnement normales sont également déterminés à l'aide de données sur les moyens d'exploitation déterminées empiriquement et/ou historiques.

30. Procédé selon l'une des revendications 18 à 29, **caractérisé en ce que** des parties du processus et/ou paramètres de processus non variables dans les conditions de fonctionnement normales sont représentés et déterminés par des modèles simplifiés.

31. Procédé selon la revendication 30, **caractérisé en ce que** des données de paramètres de processus empiriques choisies sont déterminées au moyen d'au moins un cycle de test.

32. Procédé selon l'une des revendications 18 à 31, **caractérisé en ce qu'**une estimation en ligne et/ou une détermination en ligne des paramètres de processus variables au cours du processus sont réalisées de façon cyclique et/ou en temps réel.

33. Procédé selon l'une des revendications 18 à 32, **caractérisé en ce que** l'adaptation du modèle de processus en ligne (22) est réalisée de façon cyclique et/ou en temps réel.

34. Procédé selon l'une des revendications 18 à 33, **caractérisé en ce que** l'adaptation en ligne de l'unité de régulation à plusieurs grandeurs (30) basée sur le modèle, en particulier de son unité de régulation (36), est réalisée avec des paramètres de régulation et des fonctions de régulation et/ou des circuits de régulation et/ou son unité de découplage (34) et/ou sa prise en compte des grandeurs parasites (32), de façon cyclique et en temps réel.

35. Procédé selon l'une des revendications 18 à 36, **caractérisé en ce qu'**il utilise pour la détermination en ligne et/ou l'estimation en ligne de paramètres de processus variables, en tenant compte des grandeurs de processus déterminées par les systèmes de mesure, des sous-modèles simplifiés et/ou des combinaisons de sous-modèles (80, 82, 84, 86, 88, 90, 92) du modèle de processus en ligne (22).

36. Procédé selon l'une des revendications 18 à 37, **caractérisé en ce qu'**il utilise pour l'estimation en ligne de paramètres de processus variables des méthodes numériques et/ou des équations explicites utilisant des sous-modèles simplifiés et/ou des combinaisons de sous-modèles (80, 82, 84, 86, 88, 90, 92) du modèle de processus en ligne (22).
